# EUROPEAN PATENT APPLICATION

(11) **EP 4 383 805 A1**
(43) Date of publication of application: **12.06.2024**
(21) Application number: 22860365.0
(22) Date of filing: 18.08.2022
(51) Int. Cl.: H04W 28/08, H04W 88/06

(54) **DATA TRANSMISSION METHOD, ELECTRONIC DEVICE AND COMPUTER-READABLE STORAGE MEDIUM**

(30) Priority: 27.08.2021 CN 202111000326
(71) Applicant: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Ipsilon
(86) International application number: PCT/CN2022/113235
(87) International publication number: WO 2023/025019

(57) **Abstract**

The present application provides a data transmission method, an electronic device, a computer-readable storage medium, the method includes: in a case where a mobile terminal and a core network element both have a capability of Access Traffic Steering, Switching, Splitting (ATSSS), monitoring whether an ATSSS rule table issued by the core network element is received, the ATSSS rule table includes information for indicating a steering mode and information for indicating data transmission, and the information for indicating data transmission is determined according to a network load; in a case where the ATSSS rule table issued by the core network element is received, allocating a data packet to at least one of channels corresponding to a data master card and a data secondary card for transmission according to the information for indicating the steering mode and the information for indicating the data transmission in the ATSSS rule table.

## Description

### CROSS-REFERENCE TO RELATED APPLICATIONS

The present application claims the priority of Chinese Patent Application No. 202111000326.0, filed on August 27, 2021, the contents of which are incorporated herein in their entirety by reference.

### TECHNICAL FIELD

The present application relates to the field of communications technologies, and in particular, to a data transmission method, an electronic device, and a computer-readable storage medium.

### BACKGROUND

Since born in the 1980s, after more than three decades of explosive growing, the mobile communication has become a basic information network for connecting human societies. In recent years, with the rapid development of information and network technologies, data traffic of wireless mobile communication networks is increasing at a rate close to 100% per year. It is readily apparent that there is a strong demand from users for data traffic and speed in the networks.

At present, users desire a blazing fast experience of surfing the Internet anytime and anywhere. Flagship products satisfying Stand Alone (SA) and Dual SIM Dual Active (DSDA) and supporting 5th Generation Mobile Communication Technology (5G) are launched by visionary chip vendors, which provide a higher peak speed by aggregating bandwidth resources of two Subscriber Identity Module (SIM) cards.

However, no related technology provides a detailed implementation scheme to realize an aggregation of the bandwidth resources of the two SIM cards.

### SUMMARY

In a first aspect, an embodiment of the present application provides a data transmission method applied to a mobile terminal, the method includes: in response to that the mobile terminal and a core network element both have a capability of Access Traffic Steering, Switching, Splitting (ATSSS), monitoring whether an ATSSS rule table issued by the core network element is received, the ATSSS rule table including information for indicating a steering mode and information for indicating data transmission, and the information for indicating data transmission being determined according to a network load; and in response to that the ATSSS rule table issued by the core network element is received, allocating a data packet to at least one of channels corresponding to a data master card and a data secondary card for transmission according to the information for indicating the steering mode and the information for indicating the data transmission in the ATSSS rule table.

In a second aspect, an embodiment of the present application provides a data transmission method applied to a core network element, the method includes: in response to that a mobile terminal and the core network element both have a capability of ATSSS, determining information for indicating data transmission according to a network load; and issuing an ATSSS rule table to the mobile terminal, the ATSSS rule table including information for indicating a steering mode and the information for indicating the data transmission.

In a third aspect, an embodiment of the present application provides an electronic device, which includes: at least one processor; and a memory having at least one computer program stored thereon, the at least one computer program, executed by the at least one processor, causes the at least one processor to implement the data transmission method described above.

In a fourth aspect, an embodiment of the present application provides a computer-readable storage medium having a computer program stored thereon, the computer program, executed by a processor, causes the processor to implement the data transmission method described above.

### BRIEF DESCRIPTION OF DRAWINGS

Fig. 1 is a flowchart of a data transmission method applied to a mobile terminal according to an embodiment of the present application;
Fig. 2 is a flowchart of a data transmission method applied to a core network element according to an embodiment of the present application;
Fig. 3 is a schematic interaction diagram of a data transmission method provided in Example One according to an embodiment of the present application;
Fig. 4 is a schematic interaction diagram of a data transmission method provided in Example Two according to an embodiment of the present application;
Fig. 5 is a schematic interaction diagram of a data transmission method provided in Example Three according to an embodiment of the present application;
Fig. 6 is a schematic block diagram of a data transmission apparatus according to an embodiment of the present application;
Fig. 7 is a schematic block diagram of a data transmission apparatus according to an embodiment of the present application;
Fig. 8 is a schematic block diagram of a data transmission system according to an embodiment of the present application; and
Fig. 9 is a schematic structural diagram of an electronic device according to an embodiment of the present application.

### DETAIL DESCRIPTION OF EMBODIMENTS

In order to make those skilled in the art better understand the technical solutions of the present application, a data transmission method, an electronic device and a computer-readable storage medium provided in the present application are described in detail below with reference to the accompanying drawings.

Exemplary embodiments are described in detail below with reference to the accompanying drawings, but may be embodied in different forms, and the present application should not be construed as limited to the embodiments set forth herein. The embodiments are illustrated to make the present application more thorough and complete, and for those skilled in the art more fully understanding the scope of the present application.

The embodiments of the present application and the technical features in the embodiments may be combined with each other if no conflict is incurred.

As used herein, a term "and/or" includes any and all combinations of at least one of listed items.

The terms used in the present application are for a purpose of describing particular embodiments only, and are not intended to limit the present application. As used in the present application, singular forms "a" and "the" are intended to include plural forms as well, i.e., to represent at least one, unless the context clearly defines otherwise. It should further be understood that terms "includes/comprises" and/or "made of/consisted of" in the present application are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skill in the art. It should further be understood that terms, such as those defined in common dictionaries, should be construed as having a meaning that is consistent with that in background of the existing art and the present application, and should not be construed as having an idealized or over-formal meaning, unless expressly defined in the present application.

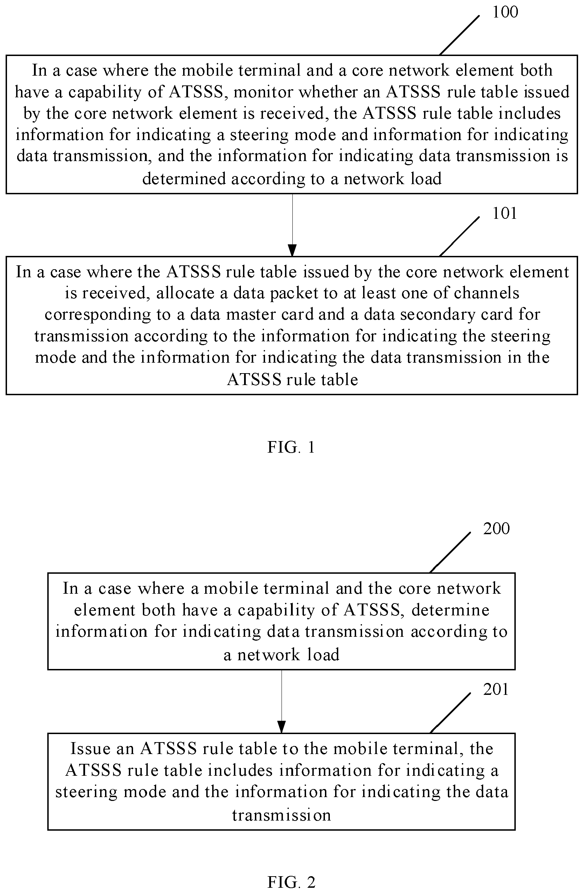

Fig. 1 is a flowchart of a data transmission method applied to a mobile terminal according to an embodiment of the present application.

In a first aspect, referring to Fig. 1, an embodiment of the present application provides a data transmission method, applied to a mobile terminal, includes following operations 100 and 101.

At operation 100, in a case where the mobile terminal and a core network element both have a capability of ATSSS, monitoring whether an ATSSS rule table issued by the core network element is received, the ATSSS rule table includes information for indicating a steering mode and information for indicating data transmission, and the information for indicating data transmission is determined according to a network load.

In the data transmission method provided in the embodiment of the present application, in order to enable the mobile terminal and the core network element each to know whether the opposite or other side has the capability of ATSSS, a negotiation manner may be adopted, that is, the mobile terminal and the core network element each may inform the opposite or other side whether it has the capability of ATSSS. The implementation may be realized in various ways.

For example, the mobile terminal receives first information sent by the core network element, the first information is configured to indicate whether the core network element has the capability of ATSSS; the mobile terminal sends second information to the core network element, the second information is configured to indicate whether the mobile terminal has the capability of ATSSS. In such way, the mobile terminal can determine whether the core network element has the capability of ATSSS according to the first information. In a case where the first information indicates that the core network element has the capability of ATSSS, it indicates that the core network element has the capability of ATSSS; in a case where the first information indicates that the core network element does not have the capability of ATSSS, it indicates that the core network element does not have the capability of ATSSS. The core network element can determine whether the mobile terminal has the capability of ATSSS according to the second information.

For example, in a case where the core network element has the capability of ATSSS, the mobile terminal receives first information sent by the core network element, the first information is configured to indicate whether the core network element has the capability of ATSSS; in a case where the core network element does not have the capability of ATSSS, the mobile terminal does not receive the first information sent by the core network element; in a case where the mobile terminal has the capability of ATSSS, the mobile terminal sends second information to the core network element, the second information is configured to indicate whether the mobile terminal has the capability of ATSSS; in a case where the mobile terminal does not have the capability of ATSSS, the mobile terminal does not send the second information to the core network element. In such way, the mobile terminal can determine whether the core network element has the capability of ATSSS according to whether the first information is received. In a case where the first information is received, it is determined that the core network element has the capability of ATSSS; in a case where the first information is not received, it is determined that the core network element does not have the capability of ATSSS. The core network element can determine whether the mobile terminal has the capability of ATSSS according to whether the second information is received. In a case where the second information is received, it is determined that the mobile terminal has the capability of ATSSS; in a case where the second information is not received, it is determined that the mobile terminal does not have the capability of ATSSS.

For example, the mobile terminal receives first information sent by the core network element, the first information is configured to indicate whether the core network element has the capability of ATSSS; in a case where the first information indicates that the core network element has the capability of ATSSS, the mobile terminal sends second information to the core network element, the second information is configured to indicate whether the mobile terminal has the capability of ATSSS; in a case where the first information indicates that the core network element does not have the capability of ATSSS, the mobile terminal does not send the second information to the core network element. In such way, as long as the core network element does not have the capability of ATSSS, the mobile terminal does not send the second information to the core network element regardless of whether the mobile terminal has the capability of ATSSS.

For example, in a case where the core network element has the capability of ATSSS, the mobile terminal receives first information sent by the core network element, the first information is configured to indicate whether the core network element has the capability of ATSSS; in a case where the first information indicates that the core network element has the capability of ATSSS, and the mobile terminal has the capability of ATSSS, the mobile terminal sends second information to the core network element, the second information is configured to indicate whether the mobile terminal has the capability of ATSSS; in a case where the first information indicates that the core network element does not have the capability of ATSSS, or the mobile terminal does not have the capability of ATSSS, the mobile terminal sends second information to the core network element.

In conclusion, the core network element may send the first information in the case where the core network element has the capability of ATSSS, or may send the first information regardless of whether the core network element has the capability of ATSSS; the mobile terminal may send the second information only in the case where the mobile terminal has the capability of ATSSS, or may send the second information only in the case where the mobile terminal and the core network element both have the capability of ATSSS, or may send the second information regardless of whether the core network element or the mobile terminal has the capability of ATSSS.

In some implementations, the first information sent by the core network element may be received in a process of registering to a cellular network, for example, a registration acceptance message, including the first information, sent by the core network element may be received. For example, the first information may be carried in an ats_ind field of the registration acceptance message.

In some implementations, in a case where the first information is a first value, the first information is configured to indicate that the core network element has the capability of ATSSS; in a case where the first information is a second value, the first information is configured to indicate that the core network element does not have the capability of ATSSS. For example, the first value may be 1, and the second value may be 0.

In some implementations, the second information may be sent to the core element in a process of creating a session (e.g., a first session mentioned subsequently), for example, a session creation request message, including the second information, may be sent to the core network element. For example, the second information may be carried in an atsss_st field of the session creation request message.

The session may refer to a Protocol Data Unit (PDU) session, and the session creation request message may refer to a PDU session creation request message.

In some implementations, in a case where the second information is a third value, the second information is configured to indicate that the mobile terminal has the capability of ATSSS; in a case where the second information is a fourth value, the second information is configured to indicate that the mobile terminal does not have the capability of ATSSS. For example, the third value may be 1, and the fourth value may be 0.

In some implementations, the information for indicating the steering mode may be carried in a descriptor in the ATSSS rule table, and a session type used by the steering mode may be carried in the descriptor. That is, the steering mode is activated for a data packet corresponding to the session type carried in the descriptor.

In some implementations, the steering mode include at least one of: a load balancing mode, a smallest delay mode, or a priority based mode. The embodiment of the present application does not limit a specific form of the information for indicating the steering mode. For example, in the 3GPP TS 24.193 specification, the information for indicating the steering mode is represented by eight bits. For example, the information for indicating the smallest delay mode is represented by 00000010, the information for indicating the load balancing mode is represented by 00000011, the information for indicating the priority based mode is represented by 00000100.

In some implementations, the information for indicating the data transmission includes a dual-card speed ratio. The dual-card speed ratio refers to a ratio of a speed of a channel corresponding to a data master card to a speed of a channel corresponding to a data secondary card. The embodiment of the present application does not limit a specific form of the dual-card speed ratio. For example, the dual-card speed ratio is represented by eight bits. For example, 00000001 indicates that the ratio of the speed of the channel corresponding to the data master card to the speed of the channel corresponding to the data secondary card is 10:0, 00000010 indicates that the ratio of the speed of the channel corresponding to the data master card to the speed of the channel corresponding to the data secondary card is 9:1, 00000011 indicates that the ratio of the speed of the channel corresponding to the data master card to the speed of the channel corresponding to the data secondary card is 8:2, 00000100 indicates that indicates that the ratio of the speed of the channel corresponding to the data master card to the speed of the channel corresponding to the data secondary card is 7:3, and so on.

In some implementations, the information for indicating the data transmission further includes at least one of: a speed threshold for triggering DSDA, a speed threshold for closing DSDA, or a second DSDA frequency band combination. The second DSDA frequency band combination is selected from a first DSDA frequency band combination. For example, a DSDA frequency band combination with a network load less than a certain preset threshold may be selected, from the first DSDA frequency band combination, as the second DSDA frequency band combination.

The first DSDA frequency band combination refers to a frequency band combination, for DSDA, of the mobile terminal, that is, a combination of frequency bands used by two SIM cards.

In some implementations, the information for indicating the data transmission includes priority information of the data master card and priority information of the data secondary card.

In some implementations, in a case where the information for indicating the steering mode is information for indicating a load balancing mode, the information for indicating the data transmission includes a dual-card speed ratio.

In some implementations, in a case where the information for indicating the steering mode is information for indicating a load balancing mode, the information for indicating the data transmission includes a dual-card speed ratio and at least one of: a speed threshold for triggering DSDA, a speed threshold for closing DSDA, or a second DSDA frequency band combination.

In some implementations, in a case where the information for indicating the steering mode is information for indicating a smallest delay mode, the information for indicating the data transmission includes the priority information of the data master card and the priority information of the data secondary card.

At operation 101, in a case where the ATSSS rule table issued by the core network element is received, allocating a data packet to at least one of channels corresponding to a data master card and a data secondary card for transmission according to the information for indicating the steering mode and the information for indicating the data transmission in the ATSSS rule table.

In some implementations, in a case where the information for indicating the data transmission includes a dual-card speed ratio, the allocating a data packet to at least one of channels corresponding to a data master card and a data secondary card for transmission according to the information for indicating the steering mode and the information for indicating the data transmission in the ATSSS rule table includes: in a case where the information for indicating the steering mode is information for indicating a load balancing mode, allocating the data packet to the channels corresponding to the data master card and the data secondary card for transmission according to the dual-card speed ratio. For example, the dual-card speed ratio is 9:1, and a data packet with a size of 2G is to be transmitted, and the data packet may be divided into two parts, i.e., 1.8G and 0.2G, the part of 1.8G is allocated to the channel corresponding to the data master card for transmission, and the part of 0.2G is allocated to the channel corresponding to the data secondary card for transmission.

In some implementations, in a case where the information for indicating the data transmission further includes a speed threshold for triggering DSDA, the data transmission method further includes: before monitoring whether the ATSSS rule table issued by the core network element is received, creating a first session for the data master card; and before allocating the data packet to the channels corresponding to the data master card and the data secondary card for transmission according to the dual-card speed ratio, detecting an internet speed of the data master card; and in a case where the internet speed of the data master card is greater than the speed threshold triggering DSDA, creating a second session for the data secondary card.

In some implementations, in a case where the internet speed of the data master card is less than or equal to the speed threshold for triggering DSDA, the operation of detecting the internet speed of the data master card is continued to be executed.

In some implementations, a type of the first session or the second session may be any one of followings: an Internet type for an Internet service, an Internet Protocol (IP) Multimedia Subsystem (IMS) type for an IP IMS service, a Multimedia Messaging Service (MMS) type for a MMS service, a Secure User Plane Location (SUPL) type, an EMERGENCY type, and the like.

In an android system, a data connection requested by an application is abstracted by the operating system as a network capability including an internet connection type, an IMS connection type, an MMS connection type, an EMERGENCY connection type, a SUPL connection type, and the like. Thus, during creating the first session or the second session, the type of the first session or the second session corresponds to the network capability.

In some implementations, in a case where the information for indicating the data transmission further includes a speed threshold for closing DSDA, the data transmission method further includes: after allocating the data packet to the channels corresponding to the data master card and the data secondary card for transmission according to the dual-card speed ratio, detecting an internet speed of the mobile terminal; and in a case where the internet speed of the mobile terminal is less than the speed threshold for closing DSDA, releasing the second session of the data secondary card.

In some implementations, in a case where the internet speed of the mobile terminal is greater than or equal to the speed threshold for closing DSDA, the operation of detecting the internet speed of the data master card is continued to be executed.

In some implementations, the data transmission method further includes: before monitoring whether the ATSSS rule table issued by the core network element is received, creating a first session for the data master card, and creating a second session for the data secondary card; and sending third information to the core network element, the third information indicating to enable DSDA.

In some implementations, the third information may be sent to the core network element in a process of modifying the second session, for example, a session modification request message including the third information may be sent to the core network element.

In some implementations, the data transmission method further includes: before monitoring whether the ATSSS rule table issued by the core network element is received, sending a first DSDA frequency band combination supported by the mobile terminal to the core network element; the information for indicating the data transmission further includes a second DSDA frequency band combination selected from the first DSDA frequency band combination according to the network load; the allocating the data packet to the channels corresponding to the data master card and the data secondary card for transmission according to the dual-card speed ratio includes: allocating the data packet to channels corresponding to the data master card and the data secondary card according to the dual-card speed ratio, and performing data transmission by adopting the second DSDA frequency band combination.

In some implementations, the first DSDA frequency band combination supported by the mobile terminal may be sent to the core network element in a user plane manner or a control plane manner. In the user plane manner, for example, a data packet filled with the first DSDA frequency band combination is sent to the core network element, and in the control plane manner, for example, the first DSDA frequency band combination may be sent to the core network element by a self-registration short message through an air interface signaling. The first DSDA frequency band combination may be, for example, n41+n41, n3+n41, or the like.

In some implementations, during sending the first DSDA frequency band combination supported by the mobile terminal to the core network element, at least one of followings may also be sent to the core network element: an International Mobile Subscriber Identity (IMSI) number of the data master card, an IMSI number of the data secondary card, an International Mobile Equipment Identity (IMEI) number of the data master card, or an IMEI number of the data secondary card. Whether the data master card and the data secondary card are located in one mobile terminal can be determined according to the IMEI number of the data master card and the IMEI number of the data secondary card.

In some implementations, in a case where the information for indicating the data transmission includes priority information of the data master card and priority information of the data secondary card, the allocating a data packet to at least one of channels corresponding to a data master card and a data secondary card for transmission according to the information for indicating the steering mode and the information for indicating the data transmission in the ATSSS rule table includes: in a case where the information for indicating the steering mode is information for indicating a smallest delay mode, allocating the data packet to a channel with a highest priority in the channels corresponding to the data master card and the data secondary card for transmission.

In some implementations, the data transmission method further includes: before monitoring whether the ATSSS rule table issued by the core network element is received, creating a first session for the data master card, and creating a second session for the data secondary card; and sending fourth information to the core network element, the fourth information indicating to enable the smallest delay mode.

The embodiment of the present application does not limit specific forms of the priority information of the data master card and the priority information of the data secondary card, and for example, the priority information of the data master card and the priority information of the data secondary card may be represented by eight bits. For example, 00000001 indicates that the data master card has a higher priority, and 00000010 indicates that the data secondary card has a higher priority.

According to the data transmission method provided in the embodiment of the present application, based on the ATSSS rule table issued by the core network element, the data packet is allocated to at least one of the channels corresponding to the data master card and the data secondary card for transmission, and because the information for indicating the data transmission is determined according to the network load, the internet speed can be obviously improved by transmitting the data packet based on the information for indicating the data transmission.

Fig. 2 is a flowchart of a data transmission method applied to a core network element according to an embodiment of the present application.

In a second aspect, referring to Fig. 2, an embodiment of the present application provides a data transmission method, applied to a core network element, including following operations 200 and 201.

At operation 200, in a case where a mobile terminal and the core network element both have a capability of ATSSS, determining information for indicating data transmission according to a network load.

In the data transmission method provided in the embodiment of the present application, in order to enable the mobile terminal and the core network element each to know whether the opposite or other side has the capability of ATSSS, a negotiation manner may be adopted, that is, the mobile terminal and the core network element each inform the opposite or other side whether it has the capability of ATSSS. The implementation may be realized in various ways.

For example, first information is sent to the mobile terminal, the first information is configured to indicate whether the core network element has the capability of ATSSS; second information sent by the mobile terminal is received, and is configured to indicate whether the mobile terminal has the capability of ATSSS. In such way, whether the mobile terminal has the capability of ATSSS can be determined according to the second information. In a case where the second information indicates that the mobile terminal has the capability of ATSSS, it indicates that the mobile terminal has the capability of ATSSS; in a case where the second information indicates that the mobile terminal does not have the capability of ATSSS, it indicates that the mobile terminal does not have the capability of ATSSS.

For example, first information is sent to the mobile terminal, the first information is configured to indicate whether the core network element has the capability of ATSSS; in a case where the mobile terminal has the capability of ATSSS, the second information sent by the mobile terminal is received, the second information is configured to indicate whether the mobile terminal has the capability of ATSSS. In a case where the mobile terminal does not have the capability of ATSSS, the second information sent by the mobile terminal is not to be received. In such way, whether the mobile terminal has the capability of ATSSS is determined according to whether the second information sent by the mobile terminal is received. In a case where the second information is received, it is determined that the mobile terminal has the capability of ATSSS; in a case where the second information is not received, it is determined that the mobile terminal does not have the capability of ATSSS.

For example, in a case where the core network element has the capability of ATSSS, first information is sent to the mobile terminal, the first information is configured to indicate whether the core network element has the capability of ATSSS; second information sent by the mobile terminal is received, the second information is configured to indicate whether the mobile terminal has the capability of ATSSS. In a case where the core network element does not have the capability of ATSSS, the first information is not to be sent to the mobile terminal.

For example, in a case where the core network element has the capability of ATSSS, first information is sent to the mobile terminal, the first information is configured to indicate whether the core network element has the capability of ATSSS; in a case where the mobile terminal has the capability of ATSSS, second information sent by the mobile terminal is received, the second information is configured to indicate whether the mobile terminal has the capability of ATSSS. In a case where the mobile terminal does not have the capability of ATSSS, the second information sent by the mobile terminal is not to be received. In such way, whether the mobile terminal has the capability of ATSSS is determined according to whether the second information sent by the mobile terminal is received.

In conclusion, the core network element may send the first information in the case where the core network element has the capability of ATSSS, or may send the first information regardless of whether the core network element has the capability of ATSSS; the mobile terminal may send the second information only in the case where the mobile terminal has the capability of ATSSS, or may send the second information only in the case where the mobile terminal and the core network element both have the capability of ATSSS, or may send the second information regardless of whether the core network element or the mobile terminal has the capability of ATSSS.

In some implementations, in a case where the first information is a first value, the first information is configured to indicate that the core network element has the capability of ATSSS; in a case where the first information is a second value, the first information is configured to indicate that the core network element does not have the capability of ATSSS. For example, the first value may be 1, and the second value may be 0.

In some implementations, in a case where the second information is a third value, the second information is configured to indicate that the mobile terminal has the capability of ATSSS; in a case where the second information is a fourth value, the second information is configured to indicate that the mobile terminal does not have the capability of ATSSS. For example, the third value may be 1, and the fourth value may be 0.

In some implementations, the information for indicating the data transmission includes a dual-card speed ratio. The dual-card speed ratio refers to a ratio of a speed of a channel corresponding to a data master card to a speed of a channel corresponding to a data secondary card. The embodiment of the present application does not limit a specific form of the dual-card speed ratio. For example, the dual-card speed ratio is represented by eight bits. For example, 00000001 indicates that the ratio of the speed of the channel corresponding to the data master card to the speed of the channel corresponding to the data secondary card is 10:0, 00000010 indicates that the ratio of the speed of the channel corresponding to the data master card to the speed of the channel corresponding to the data secondary card is 9:1, 00000011 indicates that the ratio of the speed of the channel corresponding to the data master card to the speed of the channel corresponding to the data secondary card is 8:2, 00000100 indicates that indicates that the ratio of the speed of the channel corresponding to the data master card to the speed of the channel corresponding to the data secondary card is 7:3, and so on.

In some implementations, the information for indicating the data transmission includes at least one of followings: a speed threshold for triggering DSDA, a speed threshold for closing DSDA, or a second DSDA frequency band combination.

In some implementations, the information for indicating the data transmission includes: priority information of the data master card and priority information of the data secondary card.

The embodiment of the present application does not limit specific forms of the priority information of the data master card and the priority information of the data secondary card, and for example, the priority information of the data master card and the priority information of the data secondary card may be represented by eight bits. For example, 00000001 indicates that the data master card has a higher priority, and 00000010 indicates that the data secondary card has a higher priority.

In some implementations, in a case where the information for indicating the data transmission includes a second DSDA frequency band combination, the determining information for indicating data transmission according to a network load includes: receiving a first DSDA frequency band combination supported and sent by the mobile terminal; and selecting the second DSDA frequency band combination from the first DSDA frequency band combination according to the network load. For example, a DSDA frequency band combination with a network load less than a certain preset threshold may be selected.

In some implementations, the dual-card speed ratio may be determined according to the network load in various ways. For example, a ratio of a network load of the data master card to a network load of the data secondary card is taken as a ratio of a speed of the data master card to a speed of the data secondary card.

In some implementations, the priority information of the data master card and the priority information of the data secondary card may be determined according to the network load in various ways. For example, if the network load of the data master card is greater than network load of the data secondary card, the priority of the data master card is lower than the priority of the data secondary card; if the network load of the data master card is less than the network load of the data secondary card, the priority of the data master card is higher than the priority of the data secondary card.

At operation 201, issuing an ATSSS rule table to the mobile terminal, the ATSSS rule table includes: information for indicating a steering mode and information for indicating the data transmission.

In some implementations, the information for indicating the steering mode may be carried in a descriptor in the ATSSS rule table, and a session type to be used by the steering mode may further be carried in the descriptor. That is, the steering mode is activated for a data packet corresponding to the session type carried in the descriptor.

In some implementations, the steering mode include at least one of: a load balancing mode, a smallest delay mode, or a priority based mode. The embodiment of the present application does not limit a specific form of the information for indicating the steering mode. For example, in the 3GPP TS 24.193 specification, the information for indicating the steering mode is represented by eight bits. For example, the information for indicating the smallest delay mode is represented by 00000010, the information for indicating the load balancing mode is represented by 00000011, the information for indicating the priority based mode is represented by 00000100.

In some implementations, in a case where the information for indicating the steering mode is information for indicating the load balancing mode, the information for indicating the data transmission includes a dual-card speed ratio.

In some implementations, in a case where the information for indicating the steering mode is information for indicating the load balancing mode, the information for indicating the data transmission includes a dual-card speed ratio and at least one of: a speed threshold for triggering DSDA, a speed threshold for closing DSDA, or a second DSDA frequency band combination.

In some implementations, in a case where the information for indicating the steering mode is information for indicating the smallest delay mode, the information for indicating the data transmission includes the priority information of the data master card and the priority information of the data secondary card.

In some implementations, the data transmission method further includes: before issuing the ATSSS rule table to the mobile terminal, receiving third information sent by the mobile terminal, the third information indicating to enable DSDA; or receiving fourth information sent by the mobile information, the fourth information indicating to enable the smallest delay mode.

In some implementations, in a case where the third information sent by the mobile terminal is received, the information for indicating the steering mode is information for indicating the load balancing mode, and the information for indicating the data transmission includes a dual-card speed ratio.

In some implementations, in a case where the third information sent by the mobile terminal is received, the information for indicating the steering mode is information for indicating the load balancing mode, and the information for indicating the data transmission includes a dual-card speed ratio and at least one of: a speed threshold for triggering DSDA, a speed threshold for closing DSDA, or a second DSDA frequency band combination.

In some implementations, in a case where the fourth information sent by the mobile terminal is received, the information for indicating the steering mode is information for indicating the smallest delay mode, and the information for indicating the data transmission includes priority information of the data master card and priority information of the data secondary card.

According to the data transmission method provided in the embodiment of the present application, the information for indicating the data transmission is determined based on the network load, and is carried in the ATSSS rule table to be issued to the mobile terminal, so that the mobile terminal allocates the data packet to at least one of the channels corresponding to the data master card and the data secondary card for transmission based on the ATSSS rule table issued by the core network element, and because the information for indicating the data transmission is determined according to the network load, the internet speed of the mobile terminal can be obviously improved by transmitting the data packet based on the information for indicating the data transmission.

In order to more intuitively describe an interaction process of the above data transmission method, three examples are listed below for description, and the examples are merely for convenience of the description and do not limit the scope of the present application.

### Example One

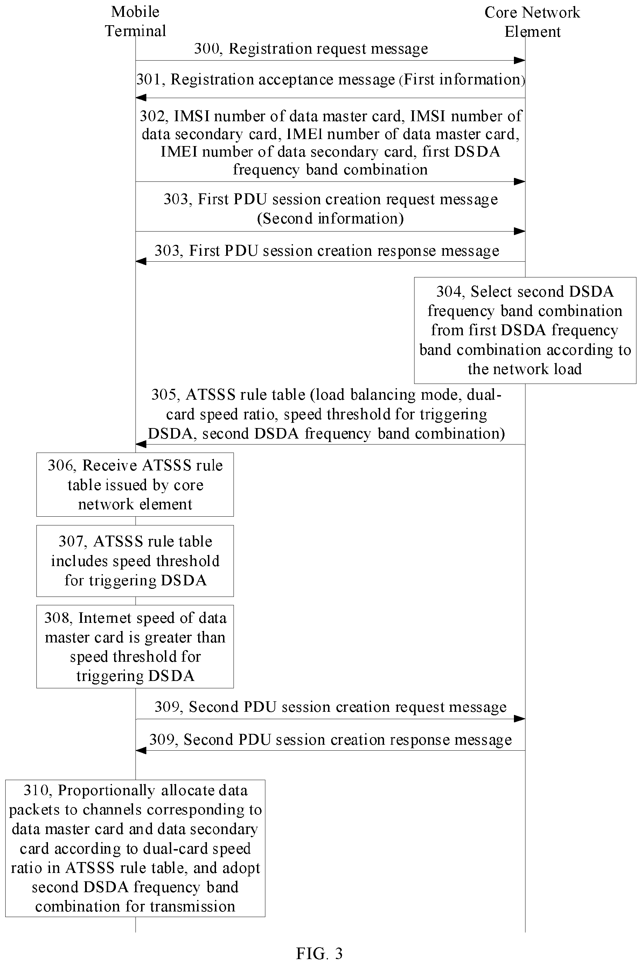

As shown in Fig. 3, the data transmission method provided in an embodiment of the present application includes following operations 300 to 310.

At operation 300, a mobile terminal sends a registration request message to a core network element.

At operation 301, the core network element sends a registration acceptance message to the mobile terminal, the registration acceptance message includes first information indicating that the core network element has a capability of ATSSS.

At operation 302, the mobile terminal sends following information to the core network element: an IMSI number of a data master card, an IMSI number of a data secondary card, an IMEI number of the data master card, an IMEI number of the data secondary card, a first DSDA frequency band combination supported by the mobile terminal.

At operation 303, the mobile terminal interacts with the core network element to create a first PDU session for the data master card, sends a first PDU session creation request message to the core network element, the first PDU session creation request message includes second information indicating that the mobile terminal has the capability of ATSSS; the core network element sends a first PDU session creation response message to the mobile terminal.

At operation 304, the core network element selects a second DSDA frequency band combination from the first DSDA frequency band combination according to a network load.

At operation 305, the core network element issues an ATSSS rule table including information for indicating a load balancing mode and information for indicating data transmission, the information for indicating the data transmission includes a dual-card speed ratio, a speed threshold for triggering DSDA, the second DSDA frequency band combination.

At operation 306, the mobile terminal monitors whether the ATSSS rule table issued by the core network element is received, in response to that the ATSSS rule table issued by the core network element is received, operation 307 is to be executed; in response to that the ATSSS rule table issued by the core network element is not received, operation 306 is continued to be executed.

At operation 307, the mobile terminal determines whether the ATSSS rule table includes the speed threshold for triggering DSDA, in response to that the ATSSS rule table includes the speed threshold for triggering DSDA, operation 308 is to be executed; in response to that the ATSSS rule table excludes the speed threshold for triggering DSDA, the process is to be ended.

At operation 308, the mobile terminal detects an internet speed of the data master card, and determines whether the internet speed of the data master card is greater than the speed threshold for triggering DSDA, in response to that the internet speed of the data master card is greater than the speed threshold for triggering DSDA, operation 309 is to be executed; in response to that the internet speed of the data master card is less than or equal to the speed threshold for triggering DSDA, operation 308 is continued to be executed.

At operation 309, the mobile terminal interacts with the core network element to create a second PDU session for the data secondary card, sends a second PDU session creation request message to the core network element; the core network element sends a second PDU session creation response message to the mobile terminal.

At operation 310, the mobile terminal proportionally allocates data packets to channels corresponding to the data master card and the data secondary card according to the dual-card speed ratio in the ATSSS rule table, and adopts the second DSDA frequency band combination for transmission.

### Example Two

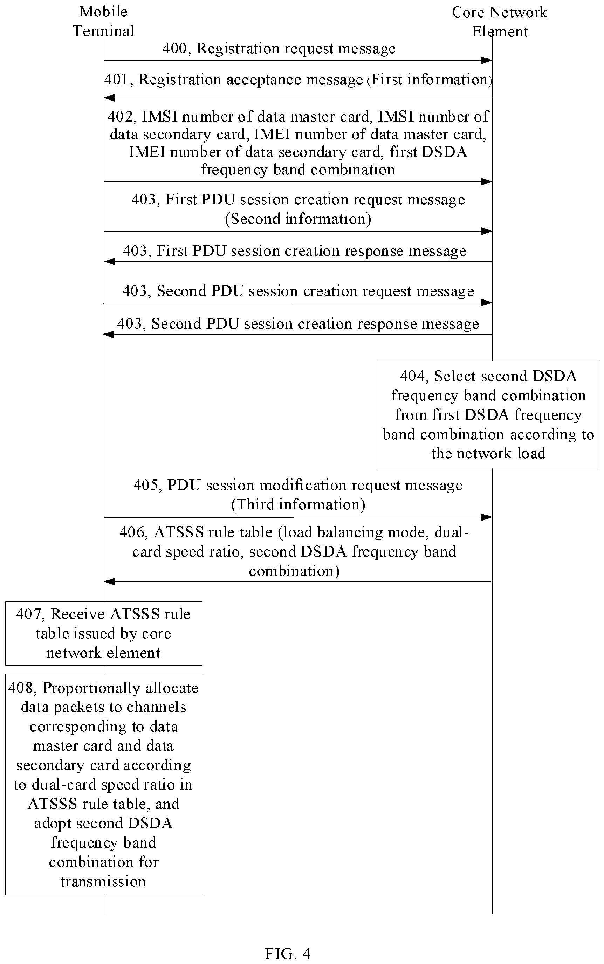

As shown in Fig. 4, the data transmission method provided in an embodiment of the present application includes following operations 400 to 408.

At operation 400, a mobile terminal sends a registration request message to a core network element.

At operation 401, the core network element sends a registration acceptance message to the mobile terminal, the registration acceptance message includes first information indicating that the core network element has a capability of ATSSS.

At operation 402, the mobile terminal sends following information to the core network element: an IMSI number of a data master card, an IMSI number of a data secondary card, an IMEI number of the data master card, an IMEI number of the data secondary card, a first DSDA frequency band combination supported by the mobile terminal.

At operation 403, the mobile terminal interacts with the core network element to create a first PDU session for the data master card, and create a second PDU session for the data secondary card, sends a first PDU session creation request message to the core network element, the first PDU session creation request message includes second information indicating that the mobile terminal has the capability of ATSSS; the core network element sends a first PDU session creation response message to the mobile terminal; the mobile terminal sends a second PDU session creation request message to the core network element; the core network element sends a second PDU session creation response message to the mobile terminal.

At operation 404, the core network element selects a second DSDA frequency band combination from the first DSDA frequency band combination according to a network load.

At operation 405, the mobile terminal sends a PDU session modification request message to the core network element; the PDU session modification request message includes third information indicating to enable DSDA.

At operation 406, the core network element issues an ATSSS rule table including information for indicating a load balancing mode and information for indicating data transmission, the information for indicating the data transmission includes a dual-card speed ratio, the second DSDA frequency band combination.

At operation 407, the mobile terminal monitors whether the ATSSS rule table issued by the core network element is received, in response to that the ATSSS rule table issued by the core network element is received, operation 408 is to be executed; in response to that the ATSSS rule table issued by the core network element is not received, operation 407 is continued to be executed.

At operation 408, the mobile terminal proportionally allocates data packets to channels corresponding to the data master card and the data secondary card according to the dual-card speed ratio in the ATSSS rule table, and adopts the second DSDA frequency band combination for transmission.

### Example Three

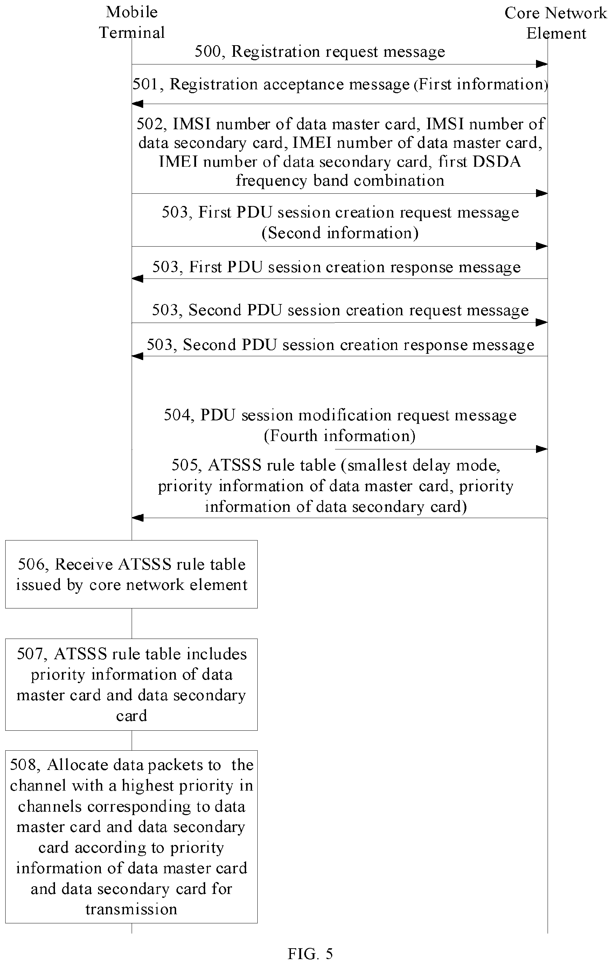

As shown in Fig. 5, the data transmission method provided in an embodiment of the present application includes following operations 500 to 508.

At operation 500, a mobile terminal sends a registration request message to a core network element.

At operation 501, the core network element sends a registration acceptance message to the mobile terminal, the registration acceptance message includes first information indicating that the core network element has a capability of ATSSS.

At operation 502, the mobile terminal sends following information to the core network element: an IMSI number of a data master card, an IMSI number of a data secondary card, an IMEI number of the data master card, an IMEI number of the data secondary card, a first DSDA frequency band combination supported by the mobile terminal.

At operation 503, the mobile terminal interacts with the core network element to create a first PDU session for the data master card, and create a second PDU session for the data secondary card, sends a first PDU session creation request message to the core network element, the first PDU session creation request message includes second information indicating that the mobile terminal has the capability of ATSSS; the core network element sends a first PDU session creation response message to the mobile terminal; the mobile terminal sends a second PDU session creation request message to the core network element; the core network element sends a second PDU session creation response message to the mobile terminal.

At operation 504, the mobile terminal sends a PDU session modification request message to the core network element, the PDU session modification request message includes fourth information indicating to enable a smallest delay mode.

At operation 505, the core network element issues an ATSSS rule table including information for indicating the smallest delay mode and information for indicating data transmission, the information for indicating the data transmission includes priority information of the data master card and priority information of the data secondary card.

At operation 506, the mobile terminal monitors whether the ATSSS rule table issued by the core network element is received, in response to that the ATSSS rule table issued by the core network element is received, operation 507 is to be executed; in response to that the ATSSS rule table issued by the core network element is not received, operation 506 is continued to be executed.

At operation 507, the mobile terminal determines whether the ATSSS rule table includes the priority information of the data master card and the priority information of the data secondary card, in response to that the ATSSS rule table includes the priority information of the data master card and the priority information of the data secondary card, operation 508 is to be executed; in response to that the ATSSS rule table excludes the priority information of the data master card and the priority information of the data secondary card, the process is to be ended.

At operation 508, the mobile terminal allocates a data packet to a channel with a highest priority in channels corresponding to the data master card and the data secondary card for transmission according to the priority information of the data master card and the priority information of the data secondary card.

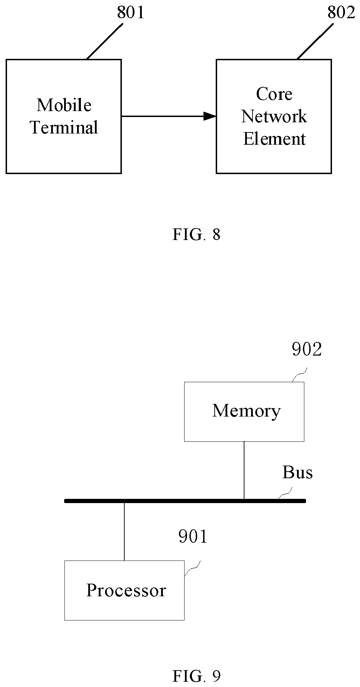

In a third aspect, an embodiment of the present application provides an electronic device, as shown in Fig. 9, including: at least one processor 901 (only one shown in Fig. 9); and a memory 902 having at least one computer program stored thereon, the at least one computer program, executed by the at least one processor 901, causes the at least one processor 901 to implement the data transmission method described above.

The processor 901 is a device having a capability of processing data, includes, but is not limited to, a Central Processing Unit (CPU), and the like; the memory 902 is a device having a capability of storing data, includes, but is not limited to, a random access memory (RAM, in particular, SDRAM, DDR, and the like), a read only memory (ROM), an electrically erasable programmable read only memory (EEPROM), and a FLASH.

In some implementations, the processor 901 and the memory 902 are connected together through a bus, and are further connected to other components of a computing device.

In a fourth aspect, an embodiment of the present application provides a computer-readable storage medium having a computer program stored thereon, the computer program, executed by a processor, causes the processor to implement the data transmission method described above.

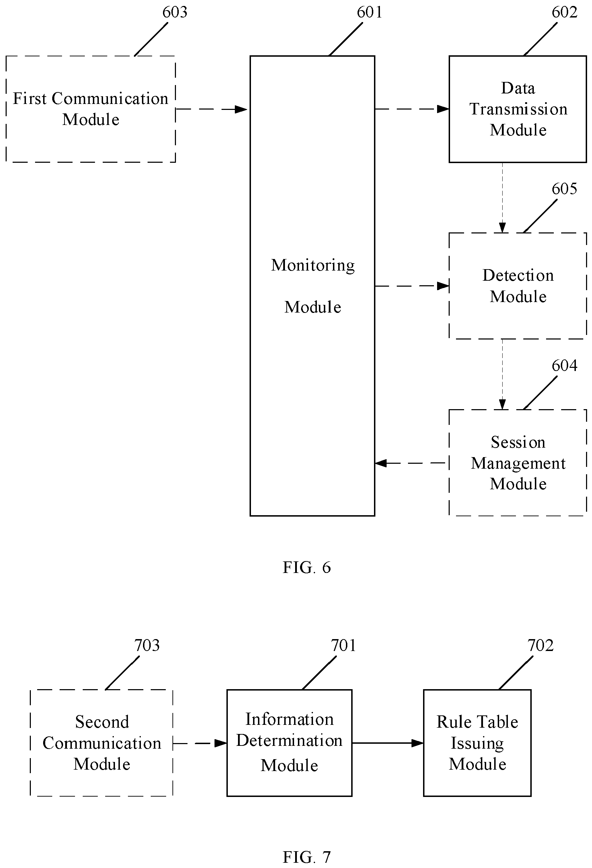

Fig. 6 is a schematic block diagram of a data transmission apparatus according to an embodiment of the present application.

In a fifth aspect, referring to Fig. 6, an embodiment of the present application provides a data transmission apparatus (e.g., a mobile terminal), including a monitoring module 601 and a data transmission module 602.

The monitoring module 601 is configured to, in a case where the mobile terminal and a core network element both have a capability of ATSSS, monitor whether an ATSSS rule table issued by the core network element is received, the ATSSS rule table includes information for indicating a steering mode and information for indicating data transmission, and the information for indicating data transmission is determined according to a network load.

The data transmission module 602 is configured to, in a case where the ATSSS rule table issued by the core network element is received, allocate a data packet to at least one of channels corresponding to a data master card and a data secondary card for transmission according to the information for indicating the steering mode and the information for indicating the data transmission in the ATSSS rule table.

In some implementations, the data transmission apparatus further includes: a first communication module 603 configured to receive first information sent by the core network element, the first information indicating whether the core network element has the capability of ATSSS, and in a case where the first information indicates that the core network element has the capability of ATSSS, send second information to the core network element, the second information indicating whether the mobile terminal has the capability of ATSSS.

In some implementations, the information for indicating the data transmission includes a dual-card speed ratio, the data transmission module 602 is configured to, in a case where the information for indicating the steering mode is information for indicating a load balancing mode, allocate the data packet to the channels corresponding to the data master card and the data secondary card for transmission according to the dual-card speed ratio.

In some implementations, the information for indicating the data transmission further includes a speed threshold for triggering DSDA, the data transmission apparatus further includes a session management module 604 and a detection module 605, the session management module 604 is configured to create a first session for the data master card; the detection module 605 is configured to detect an internet speed of the data master card; the session management module 604 is further configured to, in a case where the internet speed of the data master card is greater than the speed threshold for triggering DSDA, create a second session for the data secondary card.

In some implementations, the information for indicating the data transmission further includes a speed threshold for closing DSDA, the data transmission apparatus further includes the session management module 604 and the detection module 605, the detection module 605 is configured to detect an internet speed of the mobile terminal; the session management module 604 is configured to, in a case where the internet speed of the mobile terminal is less than the speed threshold for closing DSDA, release a second session of the data secondary card.

In some implementations, the data transmission apparatus further includes the session management module 604 and the first communication module 603, the session management module 604 is configured to create a first session for the data master card, and create a second session for the data secondary card; the first communication module 603 is configured to send third information to the core network element, the third information indicating to enable DSDA.

In some implementations, the data transmission apparatus further includes a first communication module 603 configured to send a first DSDA frequency band combination supported by the mobile terminal to the core network element; the information for indicating the data transmission further includes a second DSDA frequency band combination selected from the first DSDA frequency band combination according to the network load; the data transmission module 602 is configured to allocate the data packet to the channels corresponding to the data master card and the data secondary card according to the dual-card speed ratio, for transmission by adopting the second DSDA frequency band combination.

In some implementations, the information for indicating the data transmission includes priority information of the data master card and priority information of the data secondary card; the data transmission module 602 is further configured to, in a case where the information for indicating the steering mode is information for indicating a smallest delay mode, allocate the data packet to the channel with a highest priority in the channels corresponding to the data master card and the data secondary card for transmission.

In some implementations, the data transmission apparatus further includes the session management module 604 and the first communication module 603, the session management module 604 is configured to create a first session for the data master card, and create a second session for the data secondary card; the first communication module 603 is configured to send fourth information to the core network element, the fourth information indicating to enable the smallest delay mode.

The specific implementation process of the data transmission apparatus described above is the same as the specific implementation process of the data transmission method described above, and thus is not repeated herein.

Fig. 7 is a schematic block diagram of a data transmission apparatus according to an embodiment of the present application.

In a sixth aspect, referring to Fig. 7, an embodiment of the present application provides a data transmission apparatus (e.g., a core network element), including an information determination module 701 and a rule table issuing module 702.

The information determination module 701 is configured to, in a case where a mobile terminal and the core network element both have a capability of ATSSS, determine information for indicating data transmission according to a network load.

The rule table issuing module 702 is configured to issue an ATSSS rule table to the mobile terminal, and the ATSSS rule table includes information for indicating a steering mode and the information for indicating the data transmission.

In some implementations, the data transmission apparatus further includes a second communication module 703 configured to send first information to the mobile terminal, the first information indicating whether the core network element has the capability of ATSSS, and receive second information sent by the mobile terminal, the second information indicating whether the mobile terminal has the capability of ATSSS.

In some implementations, the data transmission apparatus further includes the second communication module 703 configured to receive third information sent by the mobile terminal, the third information indicating to enable DSDA, or receive fourth information sent by the mobile information, the fourth information indicating to enable a smallest delay mode.

In some implementations, the information for indicating the data transmission includes a dual-card speed ratio.

In some implementations, the information for indicating the data transmission further includes at least one of a speed threshold for triggering DSDA, a speed threshold for closing DSDA, or a second DSDA frequency band combination.

In some implementations, the information for indicating the data transmission includes priority information of a data master card and priority information of a data secondary card.

In some implementations, the information for indicating the data transmission includes a second DSDA frequency band combination, the information determination module 701 is configured to receive a first DSDA frequency band combination supported sent by the mobile terminal, and select the second DSDA frequency band combination from the first DSDA frequency band combination according to the network load.

The specific implementation process of the data transmission apparatus described above is the same as the specific implementation process of the data transmission method described above, and thus is not repeated herein.

Fig. 8 is a schematic block diagram of a data transmission system according to an embodiment of the present application.

In a seventh aspect, referring to Fig. 8, an embodiment of the present application provides a data transmission system, including a mobile terminal 801 and a core network element 802.

The core network element 802 is configured to, in a case where the mobile terminal 801 and the core network element 802 both have a capability of ATSSS, determine information for indicating data transmission according to a network load, and issue an ATSSS rule table to the mobile terminal 801, and the ATSSS rule table includes information for indicating a steering mode and the information for indicating the data transmission.

The mobile terminal 801 is configured to, in a case where the mobile terminal 801 and the core network element 802 both have a capability of ATSSS, monitor whether an ATSSS rule table issued by the core network element 802 is received, and in a case where the ATSSS rule table issued by the core network element 802 is received, allocate a data packet to at least one of channels corresponding to a data master card and a data secondary card for transmission according to the information for indicating the steering mode and the information for indicating the data transmission in the ATSSS rule table.

In some implementations, the mobile terminal 801 is further configured to receive first information sent by the core network element 802, the first information indicating whether the core network element 802 has the capability of ATSSS, and in a case where the first information indicates that the core network element 802 has the capability of ATSSS, send second information to the core network element 802, the second information indicating whether the mobile terminal 801 has the capability of ATSSS.

The core network element 802 is further configured to send first information to the mobile terminal 801, the first information indicating whether the core network element 802 has the capability of ATSSS, and receive second information sent by the mobile terminal 801, the second information indicating whether the mobile terminal 801 has the capability of ATSSS.

The specific implementation process of the data transmission system described above is the same as the specific implementation process of the data transmission method described above, and thus is not repeated herein.

It should be understood by those of ordinary skill in the art that all or some of the operations in the method, the system, the functional modules/components in the apparatuses disclosed above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be allocated on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The present application discloses the exemplary embodiments, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present application as set forth in the appended claims.

## Claims

1. A data transmission method, applied to a mobile terminal, comprising:
in response to that the mobile terminal and a core network element both have a capability of Access Traffic Steering, Switching, Splitting (ATSSS), monitoring whether an ATSSS rule table issued by the core network element is received, wherein the ATSSS rule table comprises information for indicating a steering mode and information for indicating data transmission, and the information for indicating data transmission is determined according to a network load; and
in response to that the ATSSS rule table issued by the core network element is received, allocating a data packet to at least one of channels corresponding to a data master card and a data secondary card for transmission according to the information for indicating the steering mode and the information for indicating the data transmission in the ATSSS rule table.

2. The method of claim 1, further comprising:
before monitoring whether the ATSSS rule table issued by the core network element is received, receiving first information sent by the core network element, wherein the first information indicates whether the core network element has the capability of ATSSS; and
in response to that the first information indicates that the core network element has the capability of ATSSS, sending second information to the core network element, wherein the second information indicates whether the mobile terminal has the capability of ATSSS.

3. The method of claim 1 or 2, wherein the information for indicating the data transmission comprises a dual-card speed ratio, the allocating a data packet to at least one of channels corresponding to a data master card and a data secondary card for transmission according to the information for indicating the steering mode and the information for indicating the data transmission in the ATSSS rule table comprises:
in response to that the information for indicating the steering mode is information for indicating a load balancing mode, allocating the data packet to the channels corresponding to the data master card and the data secondary card for transmission according to the dual-card speed ratio.

4. The method of claim 3, wherein the information for indicating the data transmission further comprises a speed threshold for triggering dual SIM dual active (DSDA), the method further comprises:
before monitoring whether the ATSSS rule table issued by the core network element is received, creating a first session for the data master card; and
before allocating the data packet to the channels corresponding to the data master card and the data secondary card for transmission according to the dual-card speed ratio, detecting an internet speed of the data master card; and in response to that the internet speed of the data master card is greater than the speed threshold for triggering DSDA, creating a second session for the data secondary card.

5. The method of claim 3, wherein the information for indicating the data transmission further comprises a speed threshold for closing DSDA, the method further comprises:
after allocating the data packet to the channels corresponding to the data master card and the data secondary card for transmission according to the dual-card speed ratio, detecting an internet speed of the mobile terminal; and
in response to that the internet speed of the mobile terminal is less than the speed threshold for closing DSDA, releasing a second session of the data secondary card.

6. The method of claim 3, further comprising:
before monitoring whether the ATSSS rule table issued by the core network element is received, creating a first session for the data master card, and creating a second session for the data secondary card; and
sending third information to the core network element, wherein the third information indicates to enable DSDA.

7. The method of claim 3, further comprising:
before monitoring whether the ATSSS rule table issued by the core network element is received, sending a first DSDA frequency band combination supported by the mobile terminal to the core network element;
the information for indicating the data transmission further comprises a second DSDA frequency band combination selected from the first DSDA frequency band combination according to the network load;
the allocating the data packet to the channels corresponding to the data master card and the data secondary card for transmission according to the dual-card speed ratio comprises: allocating the data packet to the channels corresponding to the data master card and the data secondary card according to the dual-card speed ratio, for transmission by adopting the second DSDA frequency band combination.

8. The method of claim 1 or 2, wherein the information for indicating the data transmission comprises priority information of the data master card and priority information of the data secondary card;
the allocating a data packet to at least one of channels corresponding to a data master card and a data secondary card for transmission according to the information for indicating the steering mode and the information for indicating the data transmission comprises:
in response to that the information for indicating the steering mode is information for indicating a smallest delay mode, allocating the data packet to the channel with a highest priority in the channels corresponding to the data master card and the data secondary card for transmission.

9. The method of claim 8, further comprising:
before monitoring whether the ATSSS rule table issued by the core network element is received, creating a first session for the data master card, and creating a second session for the data secondary card; and
sending fourth information to the core network element, wherein the fourth information indicates to enable the smallest delay mode.

10. A data transmission method, applied to a core network element, comprising:
in response to that a mobile terminal and the core network element both have a capability of ATSSS, determining information for indicating data transmission according to a network load; and
issuing an ATSSS rule table to the mobile terminal, wherein the ATSSS rule table comprises information for indicating a steering mode and the information for indicating the data transmission.

11. The method of claim 10, further comprising:
before determining the information for indicating data transmission according to the network load, sending first information to the mobile terminal, wherein the first information indicates whether the core network element has the capability of ATSSS; and
receiving second information sent by the mobile terminal, wherein the second information indicates whether the mobile terminal has the capability of ATSSS.

12. The method of claim 10, further comprising:
before issuing the ATSSS rule table to the mobile terminal, receiving third information sent by the mobile terminal, wherein the third information indicates to enable DSDA; or
receiving fourth information sent by the mobile information, wherein the fourth information indicates to enable a smallest delay mode.

13. The method of any one of claims 10 to 12, wherein the information for indicating the data transmission comprises a dual-card speed ratio.

14. The method of claim 13, wherein the information for indicating the data transmission further comprises at least one of followings: a speed threshold for triggering DSDA, a speed threshold for closing DSDA, or a second DSDA frequency band combination.

15. The method of any one of claims 10 to 12, wherein the information for indicating the data transmission comprises priority information of a data master card and priority information of a data secondary card.

16. The method of any one of claims 10 to 12, wherein the information for indicating the data transmission comprises a second DSDA frequency band combination, the determining information for indicating data transmission according to a network load comprises:
receiving a first DSDA frequency band combination supported and sent by the mobile terminal; and
selecting the second DSDA frequency band combination from the first DSDA frequency band combination according to the network load.

17. An electronic device, comprising:
at least one processor; and
a memory having at least one computer program stored thereon, the at least one computer program, executed by the at least one processor, causes the at least one processor to implement the data transmission method of any one of claims 1 to 16.

18. A computer-readable storage medium having a computer program stored thereon, the computer program, executed by a processor, causes the processor to implement the data transmission method of any one of claims 1 to 16.
